# DEMANDE DE BREVET EUROPEEN

(11) **EP 4 717 888 A1**
(43) Date de publication de la demande: **01.04.2026**
(21) Numéro de dépôt: 25203907.8
(22) Date de dépôt: 23.09.2025
(51) Int. Cl.: F01M 11/00, F01M 11/03, F01M 11/04, F16H 57/04, F16K 17/36, F16K 31/22

(54) **UNITE DE COLLECTE ET STOCKAGE, INCLUANT UN CARTER D'HUILE DE TRANSMISSION ET DES CLAPETS ANTI-REMONTEE D'HUILE**

(30) Priorité: 30.09.2024 FR 2410486
(71) Demandeur: Purflux Filtration, 78280 Guyancourt (FR)
(72) Inventeur: BONNE, Samuel, 14350 SOULEUVRE EN BOCAGE (FR)
(74) Mandataire: Plasseraud IP

(57) **Abrégé**

L'unité (1) stocke l'huile, reversée depuis une zone de transmission, dans un carter (2) et filtre l'huile pompée pour un retour à la zone de transmission d'un véhicule. Une paroi supérieure (2d) du carter inclut deux accès (21, 22) de remplissage du volume interne (V2) du carter, en pouvant délimiter aussi tout ou partie d'une chambre de filtration du filtre, dont le média (MF) purifie l'huile remontant du carter via des ports de connexion de cette paroi. L'unité intègre deux clapets (4) fermant les accès (21, 22), avec respectivement un premier coulisseau (4a) et un deuxième coulisseau (4b) montés pour se soulever et obturer les accès par le dessous, en étant sollicités par défaut par un moyen de rappel et/ou en ayant une structure d'organe de flottaison (4f) pour s'élever en présence d'un niveau d'huile du volume interne suffisant. Une remontée d'huile par ces accès est empêchée par ce soulèvement.

## Description

### Domaine technique

La présente divulgation relève du domaine des circuits à lubrifiant pour véhicule motorisé, notamment pour l'alimentation et la filtration en huile épurée destinée à un système de transmission tel qu'une boîte de vitesses et/ou un ensemble à moteur électrique. L'invention concerne plus particulièrement une unité de collecte et stockage et d'huile, en particulier pour une huile destinée à une transmission.

### Arrière-plan technologique

Dans de tels circuits, il est généralement prévu de réceptionner et stocker l'huile dans un carter qui dispose, pour une protection du ou des circuit(s) de lubrification des engrenages de boîte de transmission et autres composants mécaniques, d'un filtre à lubrifiant. Dans le domaine de la filtration de lubrifiant pour véhicule, une pompe est généralement associée au dispositif de filtration, la pompe aspirant l'huile ou lubrifiant à filtrer en créant une dépression du côté de l'aspiration.

Dans la zone de collecte d'huile avant filtration, le niveau d'huile peut varier, ce qui peut provoquer des problèmes pour l'aspiration : c'est le cas si le niveau d'huile est insuffisant (localement), de sorte que de l'air peut accidentellement être aspiré avec l'huile/lubrifiant. Par exemple, dans une zone à dévers, ou lorsque le véhicule accélère ou monte une côte de telle sorte que la répartition d'huile dans le réservoir du carter est déportée sur un côté éloigné de l'entrée d'aspiration, la pompe peut aspirer de l'air au lieu du liquide. Si cela se produit pendant un bref intervalle, un bruit désagréable peut être entendu. Si la situation perdure, la transmission peut cesser de fonctionner ou être endommagée.

On connaît, par le document US 3038353, un exemple de conception de carter de transmission avec une paroi de fond inclinée vers un point bas où est placé l'accès à une conduite formant une entrée d'admission reliée à une colonne de remontée d'huile. Le remplissage du carter s'effectue par des ouvertures de drainage. En cas d'inclinaison qui fait pencher l'huile loin du point bas, une valve vient obturer l'accès pour éviter une aspiration d'air. Cependant cette disposition requiert un certain encombrement du carter et le recours à une valve dans une zone de fond (ajoutant elle-aussi un certain encombrement). Le document US 2024/247601 A1 prévoit un carter avec une cloison interne et une hauteur importante, adaptée pour permettre de raccorder latéralement une pompe. Cette structure est aussi très encombrante en hauteur, mais peut limiter la largeur du carter.

Il a aussi été proposé de stocker l'huile dans le volume interne d'un carter en réalisant à la fois :
- une canalisation de retour d'huile qui descend jusqu'à un point bas et situé en arrière dans le carter ; et
- un module d'aspiration prévu dans le carter à distance du fond, avec un étage de filtration intégré.
Le document US 2009/0107769 décrit ce type de structure pour un circuit d'huile de lubrification. En cas d'inclinaison ou à-coup provoquant un déplacement d'huile près d'un bord du carter, le niveau de lubrifiant/huile peut être insuffisant.

Par ailleurs, avec des conceptions allongées et relativement aplaties du carter et/ou dans des situations avec un carter dimensionné pour collecter l'huile de différents composants mécaniques, les inclinaisons peuvent générer davantage de problèmes.
Il existe ainsi un besoin pour mieux maîtriser l'apport d'huile dans des situations instables ou avec un véhicule circulant sur une pente fortement inclinée, avec des solutions qui limitent les perturbations et déséquilibres l'alimentation en huile dans le carter. Plus généralement il reste encore de la place pour des améliorations dans ce domaine.

### Résumé

La présente divulgation vient améliorer la situation.

A cet effet, il est proposé une unité de collecte et stockage d'huile(de préférence avec un tamis et/ou un filtre pour épurer l'huile destinée à une transmission), l'unité comportant :
- un carter d'huile de transmission pourvu d'une paroi de fond et d'une paroi supérieure, entre lesquelles est délimité un volume interne du carter permettant un stockage d'huile ;
- dans la paroi supérieure, un premier accès sélectif pour le retour d'huile brute dans le carter par le dessus et un deuxième accès sélectif pour le retour d'huile brute dans le carter par le dessus (ces accès débouchant dans le volume interne) ;
- une voie de pompage d'huile stockée dans le volume interne, pour permettre la communication avec un circuit de lubrification pour la lubrification d'un ou plusieurs composants externes au volume interne et pouvant être placés au-dessus du volume interne du carter ;
- des clapets de fermeture de chacun des accès sélectifs, ces clapets comportant, logés et guidés suivant une direction de guidage dans le premier accès et dans le deuxième accès respectivement, un premier coulisseau et un deuxième coulisseau,
avec l'une au moins des particularités suivantes :
-- le premier coulisseau inclut une première partie d'obturation se soulevant en étant sollicitée par un moyen de rappel et/ou en ayant une structure d'organe ou ensemble de flottaison pour se soulever en présence d'un niveau d'huile du volume interne suffisant pour atteindre le premier accès, le premier coulisseau occupant, pour cet état soulevé, un état d'obturation du premier accès,

- le deuxième coulisseau inclut une deuxième partie d'obturation se soulevant en étant sollicitée par un moyen de rappel et/ou en ayant une structure d'organe ou ensemble de flottaison pour se soulever en présence d'un niveau d'huile du volume interne suffisant pour atteindre le deuxième accès, le deuxième coulisseau occupant, pour cet autre état soulevé, un état d'obturation du deuxième accès.

Une telle unité de collecte permet de bloquer la remontée d'huile par des colonnes ou raccords pour le remplissage du carter en huile, avec plusieurs accès qui sont distribués dans l'espace et peuvent différer dans leur intégration, selon les besoins. Bien entendu, on peut ainsi répartir les accès pour des retours de l'huile dans le carter, par exemple autour d'une zone (qui peut être une zone centrale), de sorte que le premier accès et le deuxième accès sont répartis de part et d'autre de la zone centrale du carter par laquelle passe ou commence la voie de pompage. Les coulisseaux peuvent consister en des pièces qui sont distinctes de la pièce ou ensemble constituant la paroi supérieure, ce qui laisse une grande flexibilité pour la conception du carter et de sa paroi supérieure.
Lorsqu'une ou plusieurs paires d'accès est/sont prévue(s), les accès de cette paire sont de préférence distribués de part et d'autre de la zone centrale, par exemple suivant une direction d'allongement du carter.

Lors d'accélérations latérales ou des inclinaisons du véhicule pourvu de l'unité susmentionnée, l'huile stockée dans le carter se déplace sur le côté en restant dans le volume interne, sans remonter dans la colonne ou dans le raccord permettant habituellement la redescente d'huile.

Le carter est en outre apte à intégrer un filtre dans des réalisations préférées, ailleurs que dans le volume interne ou à l'entrée d'aspiration. En particulier, l'unité peut inclure un filtre solidaire du carter, le filtre présentant une chambre de filtration accessible par une entrée qui communique avec la voie de pompage de l'huile stockée dans le volume interne. Le filtre inclut un média de filtration d'huile dans la chambre et une sortie qui peut typiquement être une sortie en communication avec le circuit de lubrification d'un ou plusieurs composants externes au carter, la chambre de filtration prévue dans le filtre étant séparée du volume interne, typiquement par la voie de pompage et/ou par une paroi ou un boîtier de filtre.

La paroi supérieure peut éventuellement constituer un support de montage d'un élément filtrant occupant la chambre de filtration. Dans des réalisations, l'une au moins parmi la paroi inférieure et la paroi supérieur du carter inclut une cloison permettant de séparer la chambre de filtration du volume interne. Par exemple, la paroi de délimitation de la chambre de filtration ou le boîtier de filtre peut correspondre à un sous-ensemble du carter qui est constitué par ces deux parois.

Lorsqu'un élément de rappel est prévu pour l'une des vannes, celle-ci peut présenter :
- fixement montée dans la paroi supérieure du carter (qui est fixe/immobile), une portion de siège qui définit/délimite l'accès sélectif sous forme d'une ouverture unique ;
- l'élément de rappel couplé aux moyens de fermeture/partie d'obturation, dans le coulisseau, cet élément s'opposant par un effet de rappel à la fermeture de l'accès sélectif ; et
- un organe de flottaison.
Par exemple, l'organe de flottaison porte un élément d'étanchéité annulaire et situé sous une terminaison fixe de l'élément de rappel (ce dernier étant en appui sur la portion de siège à l'opposé d'un contact annulaire joint - portion de siège). L'élément d'étanchéité annulaire peut coulisser avec le coulisseau (inséré dans l'accès) sans être inséré dans l'accès jusqu'à venir en contact par le dessous avec la portion de siège.

Cette disposition d'une partie de réadmission/collecte par redescente d'huile, avec une ou deux vannes à organe flotteur/de flottaison, permet de rendre la vanne considérée sensible à un niveau d'huile, par exemple en utilisant dans le coulisseau une pièce ou partie creuse ou de densité plus faible que l'huile et ainsi réagissant à la présence d'huile, ce qui permet au coulisseau formant les moyens de fermeture de suivre le mouvement de l'organe de flottaison. Une colonne ou tout du moins un raccord à dimension verticale permet de guider l'écoulement d'huile descendante pour que celle-ci vienne s'appuyer sur une face de contact supérieure prévu dans chaque coulisseau.
En pratique, dans un fonctionnement non incliné, le niveau d'huile reste en deçà de chaque accès, de sorte qu'aucune poussée ascendante ne peut être exercée sous les coulisseaux : le montage mobile de ces coulisseaux permet alors, par le poids de l'huile qui redescend jusqu'à la face de contact, une descente du coulisseau. La force de rappel est par exemple faible (faible raideur dans le cas d'un ressort) pour permettre à ce poids d'huile de surmonter l'effet de rappel.

On comprend que l'agencement maintient davantage d'huile dans le volume interne, ce qui limite le risque que de l'air parvienne dans la zone centrale où s'effectue l'aspiration, dès lors qu'une absence même partielle d'huile correspond à une baisse de poussée : le recours à une structure de coulisseau assure une bonne répétabilité des opérations (pas de risque de fermeture partielle, pas d'effet d'altération du retour à la position fermée au cours du temps). Au sein d'un carter d'huile, un tel assemblage de vanne évite d'utiliser des pièces encombrantes ou positionnées très bas dans le carter en amoindrissant la capacité de stockage en huile. Chaque coulisseau peut inclure ou consister une pièce, par exemple allongée (plus haute que large à l'état monté), qui s'étend entre une extrémité supérieure traversée par l'huile uniquement dans le sens descendant, et une extrémité inférieure non ajourée/non passante. La descente d'huile ne peut se faire qu'autour de l'extrémité inférieure.

Chaque vanne présente des moyens de fermeture conçus et montés pour s'engager dans l'accès correspondant, par le dessous et avec contact étanche annulaire (typiquement axial) contre une portion de siège pouvant définir un diamètre caractéristique de la section de passage de cet accès. Ceci permet une fermeture/obturation (hermétique) de l'accès. Une seule pièce, qui compose la paroi supérieure, peut inclure tous les accès de retour d'huile dans le volume interne du carter.
Chaque vanne peut se monter dans un port de connexion ou raccord, d'extension généralement tubulaire autour d'un axe, par exemple vertical, qui permet de porter (par le dessus/du côté extérieur de la paroi supérieure du carter) un joint annulaire périphérique. Ce joint est par exemple reçu dans une gorge à débouché axial supérieur qui entoure le coulisseau.

L'organe de flottaison peut être soit creux avec une cavité orientée vers la paroi inférieure (qui est la paroi de fond du carter), soit conçu pour être moins dense que l'huile, par exemple en ayant une densité strictement inférieure à 0,9 g/cm³ (par exemple moins de 0,9 g/cm³). Plus largement, lorsque la partie d'obturation a une structure d'organe de flottaison (flotteur), elle peut subir, en présence d'huile brute sous et autour de l'organe de flottaison, une poussée ascendante au moins au niveau d'une face inférieure, ce grâce à quoi les moyens de fermeture sont relevés - typiquement avec une extrémité supérieure du coulisseau qui peut faire saillie au-delà (au-dessus) de la paroi supérieure.

Dans des modes de réalisation, une et/ou plusieurs des vannes présente(nt) une partie ou ensemble mobile constituant le coulisseau, en permettant une mobilité par coulissement seulement suivant une direction (direction de guidage) perpendiculaire à la paroi supérieure. Dans des options, on prévoit au moins l'une des dispositions suivantes :
- suivant la direction de guidage, l'une au moins parmi les première et deuxième parties d'obturation est : disposée mobile, pour s'éloigner et se rapprocher de la paroi de fond, entre une configuration d'ouverture et l'état d'obturation pour obturer l'accès (accès dans lequel ce coulisseau est guidé) ; et est pourvue de deux portions de butée réparties, suivant la direction de guidage, de part et d'autre d'une bordure annulaire formant une zone de siège fixement solidaire de la paroi supérieure.
- les deux portions de butée permettent de limiter la course de coulissement du coulisseau (dans les deux sens) ;
- un élément d'étanchéité élastiquement déformable ou compressible forme l'une des deux portions de butée prévue pour venir en contact sous la zone de siège (contact avec cette zone de siège par le dessous), cet élément d'étanchéité s'étendant du côté du volume interne.
- l'un au moins parmi les premier et deuxième organes ou ensembles de flottaison, qui s'étend de préférence sous la paroi supérieure, est conçu pour constituer ou porter la partie d'obturation du coulisseau correspondant en étant disposé mobile suivant la direction de guidage pour permettre d'éloigner cette partie d'obturation de la paroi de fond.
- l'un au moins, et de préférence l'un et l'autre, parmi les premier et deuxième organes ou ensembles de flottaison s'étendent sous la paroi supérieure et peuvent éventuellement inclure chacun au moins une zone poreuse ou un évidement.
- l'évidement peut être est fermé et étanche et/ou peut définir un volume (sous forme de cavité inférieure) sélectivement accessible (axialement) par le bas, donc du côté de la paroi de fond.
- un fond de l'évidement peut former/présenter une surface pour une poussée ascendante (poussée d'Archimède) par l'huile du volume interne, cette poussée pouvant s'exercer pour surmonter la gravité et/ou une force d'aspiration dirigée vers le bas et s'appliquant typiquement au coulisseau en l'absence d'huile dans cet évidement.
Plus largement on comprend qu'une poussée d'Archimède ascendante peut s'exercer lors de l'immersion (avec la poussée d'huile) de l'organe de flottaison.

Dans des exemples de réalisation, deux coulisseaux sont prévus mobiles dans les accès respectifs. Les deux coulisseaux peuvent être prévus en utilisant pour chacun d'eux une même pièce/structure. Cette pièce, associé à une autre pièce d'étanchéité ou incluant un élément d'étanchéité, permet de réaliser la partie d'obturation tout en incluant aussi une extrémité supérieure, par exemple éloignée et/ou espacée de la paroi supérieure. Cette extrémité supérieure de la pièce constitutive du coulisseau peut être séparée de la partie d'obturation par une ou plusieurs ouvertures latérales (ouvertures prévues dans un tronçon ajouré de la pièce). Une telle pièce peut inclure ou porter un élément d'étanchéité, qui est par exemple porté par une extrémité inférieure de cette pièce. La pièce inclut aussi une extrémité supérieure, possiblement annulaire ou formant une collerette/bride, qui est séparée de la partie d'obturation par une ou plusieurs ouvertures latérales.

Optionnellement, les coulisseaux sont identiques et/ou l'un et l'autre des premier et deuxième organes ou ensembles de flottaison :
- incluent la partie d'obturation du coulisseau correspondant en permettant d'éloigner cette dernière de la paroi de fond jusqu'à obtenir l'obturation pour obturer l'accès dans lequel ce coulisseau est guidé ; et
- incluent respectivement un élément d'étanchéité de forme annulaire entourant une zone creuse du coulisseau, l'élément d'étanchéité étant de préférence porté ou formé à une extrémité inférieure du coulisseau.
- chaque coulisseau peut consister en un ensemble mobile ou une pièce mobile (typiquement ajourée dans sa partie qui s'étend au-dessus de la partie d'obturation) guidée dans l'accès suivant un axe de déplacement de coulisseau, qui est de préférence sensiblement perpendiculaire à la paroi de fond.

Dans des réalisations de l'unité, le carter peut supporter des composants fonctionnels et/ou définir des compartiments, sous-jacents à la paroi supérieure, pour loger des composants fonctionnels. Un ou deux composants fonctionnels sont choisis parmi un dispositif échangeur de chaleur, le filtre (dont l'entrée est raccordé fluidiquement au volume interne), une interface d'accès d'une pompe d'aspiration, un canal d'huile pressurisé formant une sortie de refoulement d'une telle pompe et/ou un tamis filtrant (distinct du filtre) pouvant être placé en amont de la pompe d'aspiration. Le tamis filtrant s'étend à un point bas et central du carter, par exemple en étant disposé plus proche et donc à une distance déterminée fixe (verticale au repos) par rapport à la paroi de fond plus faible, d'au moins 3 ou 4 cm plus petite, que l'un quelconque des accès qui sont aussi prévus à une distance de la paroi de fond qui reste fixe/prédéterminée (et comparativement plus grande que la distance déterminée).

Lorsqu'une pompe est reliée au volume interne par une voie de communication (ne passant pas par les accès de retour d'huile), l'unité avec son carter peut comporter :
- la pompe d'aspiration d'huile, qui est en particulier une pompe permettant de mettre en dépression le volume interne délimité sous la paroi supérieure (et délimité/se situant sous les clapets), le volume interne étant en communication fluidique avec une entrée ou voie d'aspiration de la pompe.
Typiquement, la pompe peut faire partie de la voie de pompage et comporte une sortie de refoulement en communication fluidique avec le circuit de lubrification d'un ou plusieurs composants, ce grâce à quoi l'huile est mise sous pression (ailleurs que dans le volume interne qui lui peut être en dépression). Eventuellement, la sortie de refoulement peut communiquer avec l'entrée du filtre, ce grâce à quoi le filtre fait partie d'un circuit/zone d'écoulement avec mise sous pression de l'huile qui est un circuit en aval de la pompe et distinct du volume interne. Une base de la pompe peut directement s'appuyer sur la paroi supérieure, avec par exemple deux ports de connexion fluidique formés avec des trous traversants dans la paroi supérieure pour permettre à des embouts/organes mâles complémentaires, prévus dans la base de la pompe, de s'engager et se raccorder de façon étanche dans les trous traversants.

Dans des exemples de réalisation du carter, le premier accès et le deuxième accès sont distants de la zone centrale et de préférence distribués de part et d'autre de la zone centrale suivant une direction d'allongement du carter, ce dernier ayant suivant la direction d'allongement :
- une longueur qui est au moins 70% plus élevée qu'une largeur de ce carter ;
- une localisation du filtre, qui est de préférence décalé latéralement et adjacent à l'un des accès, qui se situe à l'opposé de la pompe.
En complément ou indépendamment de ce qui précède, l'unité peut comporter un dispositif échangeur de chaleur qui est interposé, suivant une direction d'allongement du carter entre : le filtre, disposé à une extrémité du carter ; et la pompe qui permet de faire circuler un flux d'huile depuis le volume interne vers une entrée du dispositif échangeur de chaleur.

L'unité peut permettre d'intégrer un dispositif échangeur de chaleur, par exemple à structure parallélépipédique, au même niveau de hauteur que le filtre, sous la paroi supérieure par exemple. Plus largement, l'entrée du filtre peut communiquer avec une sortie d'un tel dispositif échangeur de chaleur.
On comprend que le dispositif échangeur peut être interposé, dans le circuit avec mise sous pression de l'huile, entre la pompe et le filtre.

Dans des réalisations du dispositif échangeur, celui inclut un bloc échangeur, de préférence métallique, ayant une paroi latérale qui s'étend entre une extrémité ou face supérieure (possible plane) de fixation à la paroi supérieure du carter et une extrémité inférieure de fond (possiblement plane) qui est latéralement espacée du carter, la paroi latérale ayant une périphérie (latérale) se situant en dehors du volume interne.
Une portion de paroi latérale du carter est par exemple en forme de U pour délimiter, à l'extérieur du carter, une cavité où est logée le dispositif échangeur. Quelle que soit la géométrie particulière retenue pour la paroi latérale du carter, une position fixée (et éventuellement encastrée) du dispositif échangeur avec un raccordement rigide à la paroi supérieure peut être prévue sans que ce dispositif échangeur ne fasse saillie latéralement vers l'extérieur par rapport à une face latérale du carter qui s'étend de l'une à l'autre des extrémités du carter.
Le dispositif échangeur est par exemple un échangeur eau-huile.

Le carter peut présenter des pièces en plastique et/ou métalliques. Le carter peut présenter une ou plusieurs des particularités suivantes :
- le carter est échancré sur un côté de façon à entourer (par exemple par trois côtés) au moins un composant choisi parmi un moyen de refroidissement et un dispositif échangeur de chaleur.
- la paroi de fond est formée par une plaque (qui a une forme plate ou sensiblement plane), éventuellement allongée (avec un allongement qui peut correspondre à une direction transverse, appelée aussi gauche-droite, dans un véhicule équipé de l'unité).
- le premier accès est plus éloigné de la paroi de fond que le deuxième accès.
- le deuxième accès est placé dans une dépression ou creusement d'un couvercle constituant tout ou partie de la paroi supérieure.
- la dépression du couvercle s'étend jusqu'à un bord d'une face de dessus de la paroi supérieure, avec de préférence une pompe d'aspiration qui recouvre le couvercle dans cette dépression.

Dans des exemples de réalisation des vannes équipant le carter de l'unité, on prévoit une ou plusieurs des particularités suivantes :
- dans l'unité, un premier élément de rappel est prévu pour le rappel du premier coulisseau vers une position soulevée/remontée et éloignée de la paroi de fond.
- dans l'unité, un deuxième élément de rappel est prévu pour le rappel du deuxième coulisseau vers une position soulevée/remontée et éloignée de la paroi de fond (la paroi de fond étant sensiblement plane, typiquement).
- ces éléments de rappel sont montés chacun de façon pouvoir présenter une hauteur variable, par exemple en étant montés par le haut sur le dessus de la paroi supérieure (par exemple sur une bordure d'un trou formant l'accès) en ayant une extrémité ou terminaison (haute) en appui sur une collerette ou rebord du coulisseau considéré.
- ces éléments de rappel sont montés chacun pour déplacer par défaut la partie d'obturation dans une configuration de fermeture d'accès, respectivement pour la fermeture du premier accès et pour la fermeture du deuxième accès (cette configuration étant une configuration remontée, possiblement obtenue par défaut, à l'arrêt du véhicule équipé de l'unité).
- le premier accès est obturé, dans une première position de premier coulisseau qui est distale de la paroi de fond (cette première position correspondant à une configuration relevée de la partie d'obturation rendue mobile avec le premier coulisseau).
- la partie d'obturation prévue dans le premier coulisseau peut obturer le premier accès du côté du volume interne en venant s'appuyer sur une zone de siège annulaire portée par la paroi supérieure, l'appui pouvant être réalisé en périphérie d'une pièce rigide constitutive du coulisseau.
- le deuxième accès est obturé dans une première position de deuxième coulisseau qui est distale de la paroi de fond (cette première position correspondant à une configuration relevée de la partie d'obturation rendue mobile avec le deuxième coulisseau).
- la partie d'obturation prévue dans le deuxième coulisseau peut obturer le deuxième accès du côté du volume interne en venant s'appuyer sur une zone de siège annulaire portée par la paroi supérieure, l'appui pouvant être réalisé en périphérie d'une pièce rigide constitutive du coulisseau.

On comprend que pour chacun de ces coulisseaux, la configuration d'ouverture est obtenue sous un effet de gravité en maintenant le bas de ces coulisseaux orienté vers la paroi de fond (ces coulisseaux avec leur partie d'obturation étant en regard de la paroi de fond formant le bas du carter). Cette configuration d'ouverture correspond à/est obtenue pour une deuxième position de coulisseau qui est proximale et donc rapprochée de la paroi de fond.
Chaque partie d'obturation peut porter ou intégrer un élément d'étanchéité annulaire, par exemple à section circulaire (éventuellement porté dans une gorge périphérique de l'organe de flottaison).

Selon une particularité, les moyens de rappel comportent un premier ressort et un deuxième ressort, respectivement couplés au premier coulisseau et au deuxième coulisseau, en étant prévus du même côté par rapport à la paroi supérieure.
De préférence, le premier coulisseau est sollicité par le premier ressort pour obtenir la configuration/position de fermeture du premier coulisseau, le premier ressort étant compressible et ayant par exemple une raideur adaptée pour se comprimer lorsqu'une masse d'huile appuie sur le dessus de la partie d'obturation du premier coulisseau. Typiquement, le deuxième coulisseau est sollicité par le deuxième ressort pour obtenir la configuration/position de fermeture du deuxième coulisseau, le deuxième ressort pouvant aussi être compressible, par exemple en ayant une raideur adaptée pour se comprimer lorsqu'une masse d'huile appuie sur le dessus de la partie d'obturation du deuxième coulisseau.

Avec ces dispositions, chacun des accès est passant seulement dans des conditions avec écoulement d'huile gravitaire, avec cette huile qui s'accumule sur une face supérieure de coulisseau tant que l'effet de rappel du ressort n'est pas surmonté. Les accès permettent l'admission d'huile brute dans le carter par le dessus avec un effet anti-remontée d'huile automatique, lequel est assisté par une force de rappel en cas d'inclinaison du carter.
Il est permis d'assister le clapet pour sa fermeture par un ressort de très faible raideur. A contrario, en situation horizontale, le poids de l'huile qui redescend et les conditions de dépression (la dépression dans le carter, due à l'aspiration de l'huile par la pompe via la voie de pompage, s'ajoute au poids de l'huile) vont permettre l'abaissement et donc l'ouverture du clapet.

On comprend que les coulisseaux avec un élément d'étanchéité forment des clapets passifs qui, dans des conditions de fonctionnement avec à la fois un déficit de pression dans le volume interne et un poids d'huile s'exerçant par le dessus, vont être ouverts/abaissés, et cela tant qu'il n'y a pas un niveau d'huile suffisant pour les repousser vers le haut, ce qui peut nécessiter que l'huile remonte jusque dans un évidement inférieur de ces clapets. L'élément d'étanchéité peut entourer une zone du coulisseau qui est creuse mais non traversante pour la circulation d'huile (ni de l'intérieur vers l'extérieur du carter ni l'inverse), en étant de préférence porté ou formé à l'extrémité inférieure du coulisseau.

Dans le carter, il est prévu une voie de pompage qui permet à l'huile stockée dans le volume interne de parvenir au filtre, après avoir traversé un tamis de filtration. La voie de pompage, qui s'étend jusqu'à la pompe depuis la zone centrale, peut inclure des canaux de communication avec la pompe qui sont entièrement située sous la paroi supérieure, par exemple en longeant cette paroi supérieure jusqu'à un port d'entrée se situant dans ou sous une base de la pompe. Un étage d'échange de chaleur peut en outre être prévu en aval de la pompe.
La voie de pompage présente un canal qui s'étend depuis une zone centrale vers un point périphérique du carter où l'huile peut remonter dans la pompe d'aspiration. La zone centrale est par exemple pourvue d'une crépine, le tamis formant tout ou partie de la crépine. Plus largement, le tamis peut présenter une structure en trois dimensions, par exemple en étant bombé vers le bas tout en disposant d'un cadre de fixation qui s'étend suivant un plan, par exemple un plan horizontal parallèle à la paroi de fond.

L'unité, avec le carter d'huile de transmission, peut être disposée dans une partie inférieure d'un châssis d'un mécanisme de motorisation électrique et d'entraînement, ce châssis étant attaché à un véhicule. On comprend que le carter reçoit et stocke l'huile tombant des régions de mise en mouvement du mécanisme de fonctionnement/motorisation lubrifié par l'huile.
La paroi supérieure du carter porte au moins une sortie pour la remontée d'huile sous pression vers de telles régions.

Le filtre peut faire partie d'un étage de filtration qui est décalé latéralement par rapport à la zone centrale et distincte d'une zone d'intégration ou raccordement de la pompe d'aspiration. Dans des réalisation le filtre est du type à cartouche filtrante, possiblement remplaçable. Le cas échéant, le filtre comporte un boîtier réutilisable, éventuellement dont une partie fait partie intégrante d'un composant de carter d'huile tel que la paroi supérieure. Une cartouche ou un insert de filtration peut se monter de manière amovible dans le boîtier réutilisable, avec de préférence un média filtrant tubulaire permettant une filtration de type centripète au travers du média filtrant.
Dans certaines conceptions de l'unité, il est prévu un élément filtrant adapté pour être monté entre la paroi inférieure et la paroi supérieure, l'élément filtrant étant par exemple logé dans la chambre de filtration en incluant un flasque pourvu d'un orifice central et ledit média filtrant sous une forme annulaire dont une extrémité se raccorde au flasque. L'élément filtrant (appartenant au filtre) peut ainsi délimiter, par une face interne du média filtrant (média tubulaire), un espace intérieur creux en communication fluidique avec la sortie via l'orifice central du flasque. L'élément filtrant sépare de façon étanche une zone d'amont en liaison avec l'entrée du filtre (une région périphérique de la chambre faisant partie de la zone d'amont) d'une zone d'aval qui inclut l'espace intérieur creux.

Dans des options, il peut être prévu que :
- la paroi supérieure du carter comporte au moins un, et de préférence au moins deux raccords de circulation d'huile qui sont distincts des accès ;
- la paroi supérieure du carter délimite tout ou partie d'une chambre de filtration du filtre, ainsi que la sortie du filtre.
- le média est adapté pour purifier la totalité de l'huile qui sort du carter via des raccords de remontée d'huile qui sont prévus dans cette paroi supérieure, étant entendu que tous les raccords sont en communication avec la sortie du filtre.
- la sortie, possiblement orientée vers une paroi latérale externe périphérique du carter, peut être intégrée dans la paroi supérieure.
- la sortie entoure un embout saillant formé comme une projection annulaire sur le flasque, de façon à se raccorder de façon étanche à l'élément de filtration par un contact annulaire radial réalisé sur ledit embout prévu dans le flasque.
- l'élément filtrant, qui présente un axe central pouvant coïncider avec un axe de l'embout, est une cartouche pourvue d'un flasque de base opposé au flasque formant la sortie.
- le flasque de base est espacé, axialement suivant l'axe central de l'élément filtrant, d'une première cloison de délimitation de la chambre de filtration, ce grâce à quoi l'élément filtrant peut être déconnecté de la sortie en étant déplacé axialement vers la première cloison de délimitation.
- la première cloison de délimitation est formée pour partie par un élément de cloisonnement appartenant à la paroi supérieure et pour partie par un autre élément de cloisonnement appartenant à la paroi inférieure.
- une partie femelle de la sortie qui entoure l'embout peut être formée uniquement dans la paroi supérieure.

Selon une particularité, chaque organe de flottaison est une sous-partie du coulisseau, formant son extrémité inférieure, et qui peut présenter un creusement formé sur au moins 30% de la longueur totale du coulisseau (longueur mesurée perpendiculairement à la paroi supérieure/plan général d'extension de la paroi supérieure).
Selon des conceptions, chaque coulisseau prévu dans une vanne est conçu pour ne s'ouvrir qu'en présence d'un niveau d'huile suffisant pour peser sur le dessus du coulisseau et/ou en présence d'une dépression dans le volume interne. En cas d'inclinaison avec l'huile qui remonte dans le volume interne jusqu'à l'accès, le coulisseau remonte pour se fermer car :
- il n'est plus soumis à un différentiel de pression ; et
- si un organe de flottaison (creux typiquement) est prévu, alors le coulisseau est soumis à une poussée d'Archimède.
On comprend qu'une poussée d'Archimède correspond à une sollicitation du coulisseau de sens inverse à la poussée gravitaire, en co-agissant avec l'éventuel effet de rappel, cette poussée d'Archimède étant permise en l'absence localement d'effet de la mise en dépression du volume interne.

Dans certaines réalisations des moyens de fermeture incluant les coulisseaux :
- l'élément de rappel s'étend entre une terminaison fixe inférieure solidaire de la portion de siège et une terminaison mobile qui s'appuie axialement par le dessous contre une collerette ou bride du coulisseau.
- l'organe flotteur/de flottaison est apte à être abaissé en suivant un abaissement du coulisseau.
- la vanne est dépourvue de média filtrant.
- l'accès forme un orifice de montage traversé par le coulisseau qui est ajouré pour permettre un passage d'huile entre une partie d'obturation radiale du coulisseau et plusieurs ouvertures latérales qui passent sous la portion de siège (à l'état abaissé/ouvert du coulisseau).
- un au moins des coulisseaux est à base d'un matériau plastique, éventuellement prévu avec une partie creuse permettant d'abaisser la densité de l'élément flotteur.
- un au moins des coulisseaux comporte une pièce dont la section se rétrécit pour présenter une extrémité inférieure d'insertion, passant au travers de l'accès lors du montage.
- un élément d'étanchéité est rapporté sur l'extrémité inférieure après le passage de l'extrémité inférieure d'insertion dans l'accès pour faire saillie sous la paroi supérieure du carter.

L'agencement peut inclure un composant de carter ou un couvercle, qui est par exemple creux ou concave du côté d'un raccordement (par une face inférieure de ce couvercle/composant) avec les conduites formant la voie de passage. Lorsque le couvercle est allongé suivant une direction d'allongement horizontale, deux vannes de la partie d'admission peuvent être distribuées à deux positions opposées suivant la direction d'allongement horizontale.
L'unité présente un agencement du carter qui est compatible avec une intégration dans un volume de faible hauteur, l'unité pouvant être obtenue par un procédé d'assemblage sans étape complexe.

### Brève description des dessins

D'autres caractéristiques, détails et avantages apparaîtront à la lecture de la description détaillée ci-après, et à l'analyse des dessins annexés, sur lesquels :
la figure 1 montre, par une vue en coupe, une unité avec carter qui inclut deux entrées d'admission d'huile équipées chacune d'une vanne à organe flotteur, dans une situation penchée qui modifie la distribution d'huile dans le carter avec une des vannes qui se ferme par soulèvement de l'organe flotteur.
[la figure 2A est une vue détaille, en coupe, d'une vanne similaire à celles montrées sur la figure 1, en position d'ouverture avec la présence additionnelle d'un élément de rappel.
la figure 2B illustre, par une vue en perspective éclatée, un exemple d'assemblage d'une vanne de la figure 2A, ce montage étant applicable à une variante sans élément de rappel.
la figure 3 est une vue en perspective d'un exemple d'une unité de collecte, admission et filtration d'huile, identique ou similaire à celle de la figure 1, avec une pompe et un filtre disposés sur les extrémités opposées du carter de cette unité.
la figure 4A montre, à l'aide d'une coupe horizontale, une vue en de l'agencement de différents composants de l'unité de la figure 3 ; avec la configuration passante (ouverte) des coulisseaux.
la figure 4B est une vue de dessus de l'unité de la figure 3, avec des flèches reflétant la circulation d'huile et (en pointillés) la circulation des fluides (dont un fluide de refroidissement) au niveau d'une zone d'échange de chaleur.
la figure 5 montre un détail, par une vue en coupe horizontale dans l'unité de la figure 3, permettant d'illustrer en périphérie du volume interne une partie du circuit de circulation d'huile sous pression, en aval de la pompe.
la figure 6 montre des voies de remontée d'huile du côté sous pression, en aval de la pompe, dans le cas d'une unité du genre montré sur la figure 3, dans une application non limitative pour lubrifier des composants externes schématiquement illustrés constitués d'un réducteur de vitesse et d'un moteur électrique.
la figure 7 est une vue de dessus schématique d'un agencement du carter d'huile d'une unité conforme à l'invention, ici dans le cas particulier d'une distribution d'accès avec plusieurs (quatre) vannes réparties dans différentes zones périphériques ou secteurs angulaires du carter d'huile, autour d'une zone centrale équipée de l'entrée d'aspiration.

### Description de mode(s) de réalisation

Ci-après un exposé détaillé de plusieurs modes de réalisation de l'invention assorti d'exemples et de référence aux dessins. Sur les différentes figures, des références identiques indiquent des éléments identiques ou similaires. La structure et/ou le nombre de certains composants, apparaissant sur l'une au moins des figures peut, bien entendu, être utilisable dans un cas correspondant à une autre figure. Les termes « dessous », inférieur(e), supérieur(e), remontée, « ascendant(e) », descendant ou retombant/retombée et termes similaires sont ici systématiquement à interpréter dans la logique habituelle d'un carter d'huile avec un fond formant le bas et qui se remplit par le haut, ce carter présentant des raccords spécifiques (distincts des accès pour la retombée d'huile) pour la remontée d'huile, c'est-à-dire en prenant la paroi de fond du carter comme référence pour le bas. Les caractéristiques « haut » et « bas » pour un carter d'huile intégrant une voie de pompage ascendante ne font de toute façon aucun doute pour un homme du métier.

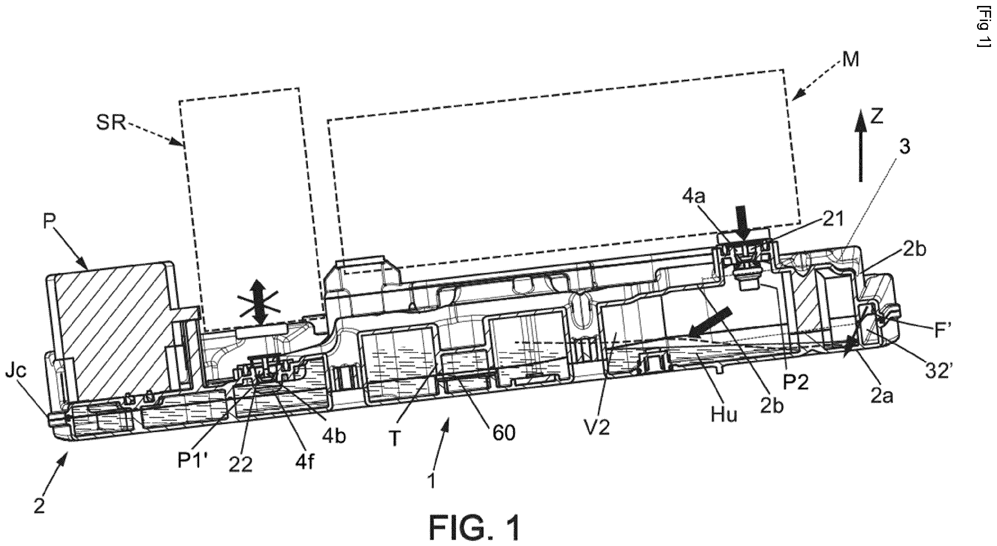

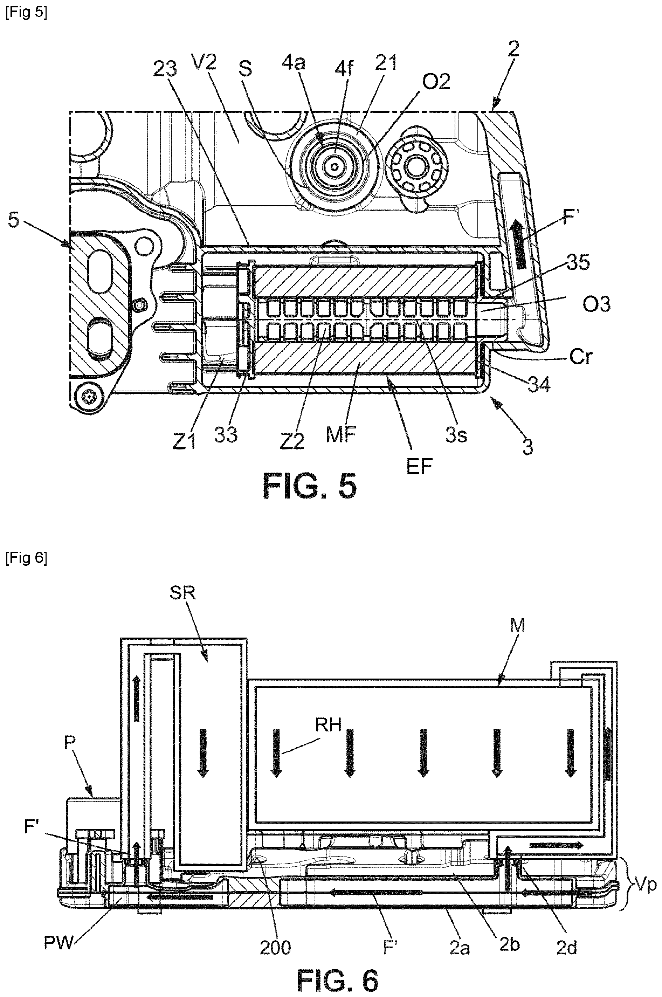

En référence aux figures 1, 3 et 6, il est représenté une unité 1 de stockage, collecte et filtration d'huile, pourvue d'un carter 2 (formant un carter d'huile de transmission) et d'un filtre 3. L'unité 1 permet de former un volume interne V2 de stockage d'huile, qui est délimité entre une paroi de fond 2a (paroi inférieure) et une paroi supérieure 2b du carter 2, et inclut des accès 21, 22 d'admission huile (huile considérée comme une huile brute) ayant servi à une lubrification de composants Sr, M externes au carter 2. Comme visible sur les figures 1 et 6, l'unité 1 forme une interface (disposant d'une pompe P) entre la partie de circuit de retour et stockage d'huile qui utilise sélectivement les accès 21, 22 prévus sur la paroi supérieure 2b pour la retombée d'huile, et la partie de circuit C3 d'huile sous pression permettant de remonter l'huile vers les composants externes Sr, M (figure 6) qui peuvent être disposés au-dessus de la paroi supérieure 2.
La paroi supérieure 2b peut être formée d'un seul tenant, typiquement d'une seule pièce en matériau plastique rigide par exemple. La paroi de fond 2a, inférieure, peut être formée d'une seule pièce en matériau plastique rigide. Comme montrée sur les figures 1, 3, 4A et 6, une jonction Jc peut être obtenue, en tant que liaison étanche continue, entre un bord périphérique de la pièce formant la paroi de fond 2a et la bordure périphérique d'un couvercle ou pièce constituant la paroi supérieure 2b. On comprend que ces deux composants de carter sont creux et peuvent inclure chacun, intérieurement dans la/les cavités de ces composants, un ensemble de cloisons ou projections/nervures. Sur la figure 1, on peut voir que des parties verticales intérieures (suivant la direction Z verticale) réalisent des connexion inter-parois (entre les parois 2a et 2b) avec une répartition à différents endroits du carter 2, en étant écartées les unes par rapport aux autres suivant la direction d'allongement de ce dernier. Optionnellement, certaines cloisons internes sont prévues dans le carter 2 en suivant sensiblement la direction d'allongement de ce dernier, de façon à délimiter des conduites ou canaux CP1, CP2, 32', exposés plus en détail par la suite.

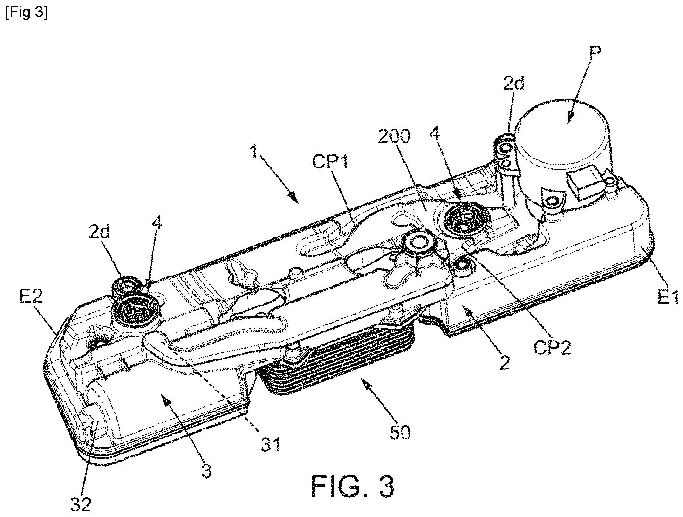

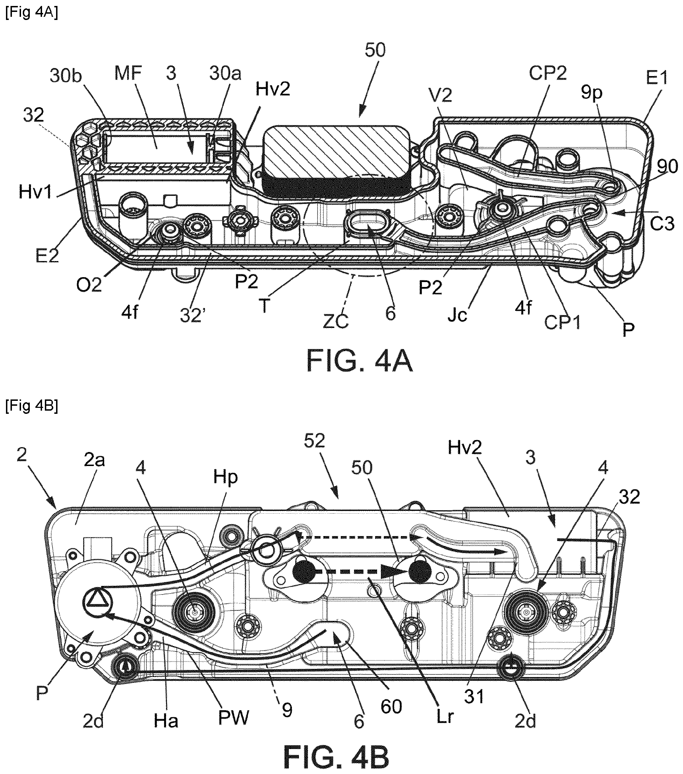

Les figures 3, 4A et 4B montrent que l'unité 1 intègre un étage de filtration avec le filtre 3, utilisé dans la partie de circuit C3 en aval d'une pompe P d'aspiration d'huile. Pour atteindre ce circuit ou partie de circuit C3, l'huile Hu stockée dans le volume interne V2 doit d'abord traverser un préfiltre ou un tamis 60 monté dans une entrée d'aspiration 6. Typiquement dans une position centrale dans le carter 2, cette entrée 6 (éloignée de de la pompe P et du circuit C3) peut être entourée d'une zone annulaire, de sorte que l'huile Hu peut parvenir à cette entrée 6 par toutes les directions ou par de nombreuses directions. Le carter 2 peut être allongé en s'étendant entre une première extrémité E1 et une deuxième extrémité E2. L'entrée 6 peut être placée dans une zone centrale se situant à mi-distance de ces deux extrémités opposées. L'allongement du carter 2 est prévu suivant une direction horizontale (direction D2), avec la paroi de fond 2a qui peut être sensiblement plane/horizontale.

Dans une configuration préférée, le filtre 3 est disposé parallèlement à la paroi de fond 2a. Plus généralement, le filtre 3 peut être pourvu d'un média filtrant MF qui est disposé dans une chambre de filtration qui est délimité, par le haut (à l'opposé de la paroi de fond 2a) par la paroi supérieure 2b du carter qui peut être sensiblement parallèle à la paroi de fond 2a. Une entrée 31 et une sortie 32 du filtre 3 peuvent aussi être prévues dans le carter 2, avec l'entrée 31 et/ou la sortie 32 qui sont par exemple intégrées dans la paroi supérieure 2b. Le carter 2 peut intégrer différents composants fonctionnels qui équipent la partie de circuit C3, avec de préférence une répartition de deux composants relativement encombrants, à savoir le filtre 3 et la pompe d'aspiration P, sur les deux extrémités E1, E2 du carter 2. Un élément filtrant EF du filtre 3, pourvu du média filtrant MF, peut s'étendre entièrement à l'intérieur du carter 2, tout en étant séparé du volume interne V2 pour le stockage d'huile Hu, à l'aide d'une cloison adaptée.

### Exemple de circuit pour acheminer l'huile sous pression jusqu'au filtre

Le carter d'huile 2 peut inclure des fonctions d'écoulement d'huile Hp mise sous pression, en disposant de conduites ou canaux CP1, CP2 reliés à la pompe d'aspiration P, qui peut être optionnellement montée directement sur le carter 2, et en disposant aussi d'au moins une conduite 32' d'écoulement d'huile purifiée qui s'étend depuis la sortie du filtre 3. Le carter 2 dispose par exemple d'un ou plusieurs raccords 2d, par exemple au nombre de deux comme sur les figures 4B et 6, qui permettent d'évacuer un flux F' d'huile épurée par le filtre 3. La paroi supérieure 2b portant les accès 21, 22 peu aussi inclure/porter les raccords 2d.

En référence aux figures 4A et 4B, l'entrée d'aspiration 6 forme l'entrée d'une voie de pompage, qui inclut au moins un canal s'étendant depuis la zone centrale ZC vers un point périphérique du carter 2 où l'huile peut remonter dans la pompe d'aspiration P. L'huile aspirée Ha a été préfiltrée, par utilisation d'un préfiltre tel qu'un tamis 60 par exemple.
L'entrée d'aspiration 6 est placée à l'intérieur du carter 2 et dotée d'un orifice d'aspiration (possiblement tunique) pour aspirer l'huile stockée dans le carter d'huile. Un tamis 60 (tamis d'une crépine par exemple) peut être interposé entre une section tubulaire T délimitant l'orifice d'aspiration, formée par une projection de la paroi supérieure, et un support (typiquement vertical) intégralement formé avec la paroi de fond/inférieure 2a.
Le tamis 60 peut présenter une bride annulaire prise en sandwich entre les parois de fond et supérieure, la partie de filtration/passante du tamis 60 étant optionnellement une partie bombée raccordée à la bride annulaire. La partie bombée peut former une partie insérée dans ou à l'inverse bombée à l'opposé de la section tubulaire T formée intégralement avec la paroi supérieure 2b.

La zone centrale ZC est par exemple pourvue d'une crépine, le tamis 60 formant tout ou partie de la crépine. Plus largement, le tamis 60 peut présenter une structure en trois dimensions, par exemple en étant bombé vers le bas tout en disposant d'un cadre de fixation qui s'étend suivant un plan, par exemple un plan horizontal parallèle à la paroi de fond 2a.

A partir d'une sortie de la pompe P, le carter 2 permet de délimiter/définir la partie de circuit C3 pour l'évacuation d'huile en direction des composants à lubrifier. Au moins jusqu'au filtre 3, la partie de circuit C3 ainsi formée dans le Carter 2 peut permettre de faire circuler de l'huile dans une direction (par refoulement/ avec pression) sensiblement inverse de la direction de circulation (par aspiration) du premier canal CP1 qui s'étend entre l'entrée 6 et une entrée de la pompe d'aspiration P.
Plus généralement, des canaux de circulation adaptés permettent de relier les composants fonctionnels équipant le circuit C3. Une paire de cloisons internes permet de séparer le premier canal CP1 du volume interne V2 et éventuellement de le séparer aussi d'une conduite 32' (aussi délimitée par la cloison PW qui est prévu parallèlement à la paroi latérale extérieure du carter 2) où circule l'huile déjà purifiée. Le tamis 60, ayant une fonction de préfiltre, est interposé entre ce premier canal CP1 et des moyens de support formés/portés par la paroi de fond 2a. Le premier canal CP1 s'étend depuis un port d'accès permettant l'admission depuis la zone centrale ZC. Ce port d'accès/admission est par exemple délimité par une projection verticale de cloisonnement qui est venue de matière avec la paroi supérieure 2, formée comme une section tubulaire T (sensiblement verticale par exemple) qui débouche dans le volume interne V2 par le bas/en regard de la paroi de fond 2a. La section tubulaire T est fendue ou ouverte latéralement, sur un côté, pour déboucher dans le premier canal CP1 qui longe la portion de recouvrement composant la paroi supérieure 2b. Ce côté est par exemple orienté vers l'extrémité E1 où se raccorde la pompe P, comme bien visible sur les figures 4A et 4B.

La pompe P réalise l'aspiration de l'huile préfiltrée via ce premier canal CP1 qui rejoint un port de connexion fluidique 9p formant une entrée de la pompe P. Une mise sous pression est réalisée par la pompe P. L'effet d'aspiration tend à mettre le volume interne V2 en dépression. Comme illustré de manière non limitative sur la figure 4A, la pompe P refoule l'huile par un deuxième canal CP2, interne au carter 2, qui s'étend depuis la sortie de refoulement 90 de la pompe P jusqu'à une zone d'échange thermique 5 (figure 5) prévue en amont du filtre 3 dans cette partie de circuit C3.

Optionnellement, le premier canal CP1 et le deuxième canal CP2 peuvent, ensemble, former les deux branches d'une forme en V qui se rejoignent sous la pompe P. L'un des accès 21, 22 peut être prévu entre le premier canal CP1 et le deuxième canal CP2 qui longent tous deux la portion de recouvrement/horizontale du composant constituant la paroi supérieure 2b. Indépendamment du choix de la structure de canalisation spécifiquement utilisée pour faire circuler l'huile préfiltrée avec utilisation d'une pompe P, l'unité 1 peut comporter un moyen de refroidissement et/ou un dispositif échangeur de chaleur 50 utilisant un fluide ou liquide Lr pour l'échange de chaleur.

En aval du dispositif de chaleur 50, la filtration est réalisée à l'aide du filtre 3, possiblement en permettant une filtration centripète qui optimise la surface disponible du média MF s'il est conformé de façon tubulaire autour d'un espace intérieur creux communiquant avec la sortie 32. Dans le carter 2, la sortie 32 du filtre 3 peut être excentrée, par exemple située à l'extrémité E2. Le carter 2 peut disposer aussi d'une voie 32' de circulation, par exemple agencée de façon périphérique pour contourner la zone de stockage d'huile brute (non préfiltrée) du volume interne V2. Une telle voie 32' peut alors distribuer le flux F' d'huile épurée dans les raccords 2d. Dans des options, la voie 32' peut être une branche ou sous-partie d'une ou plusieurs voies périphériques VP formant des tronçons terminaux par lesquelles l'huile purifiée peut rejoindre les raccords 2d, en pouvant alors ressortir du carter 2, de manière ascendante, via ces raccords 2d qui débouchent à l'extérieur du carter 2.

### Exemple d'application de l'unité

L'unité 1 peut disposer d'une interface se connectant à un système de transmission (au moins pour collecter de l'huile et pour remonter l'huile purifiée), ce système disposant de pièces participant à un transfert de puissance mécanique, avec par exemple le moteur électrique M du véhicule et un convertisseur ou réducteur SR de vitesse. La puissance du moteur peut être transmise au convertisseur de couple qui entraîne l'arbre de turbine. Les embrayages d'une boîte de vitesses ou réducteur de vitesse SR (exemple de dispositif de transmission au sens de la présente divulgation) sont enclenchés pour établir un flux de puissance entre l'arbre de turbine et l'arbre de sortie.
L'unité 1 peut intégrer une ou plusieurs fonctions de refroidissement pour compléter l'effet de lubrification. Cela peut, le cas échéant, contribuer à limiter un risque d'échauffement excessif au niveau du carter 2, voire contribuer au refroidissement de la batterie associée au moteur électrique M.

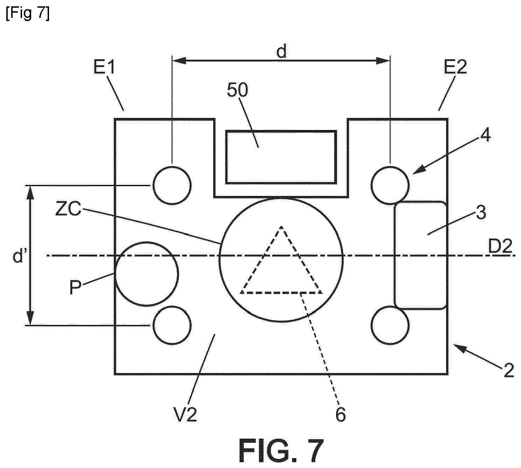

La figure 3 montre un exemple dans lequel l'unité 1 incorpore un dispositif échangeur de chaleur 50 dans un volume généralement parallélépipédique défini par le carter 2. Plus largement, l'unité 1 peut disposer du carter 2 et d'un dispositif échangeur de chaleur 50 ayant une zone échangeuse, par exemple réalisée dans un bloc échangeur, de préférence métallique (à base d'aluminium de préférence), et qui forme ainsi une sous-partie du circuit C3 qui se branche en aval de la pompe P, en se connectant d'une part au deuxième canal CP2, et d'autre part à une voie d'amenée à l'entrée 31 du filtre 3. Le liquide Lr pour l'échange de chaleur peut être un liquide de refroidissement qui rejoint le bloc échangeur ou zone échangeuse similaire par le haut, par exemple en utilisant des raccordements fluidiques passant par des ouvertures traversantes de la paroi supérieure 2b ou en contournant la paroi supérieure 2b.
Pour minimiser l'encombrement additionnel lié au dispositif 50, tout en plaçant ce composant à proximité de la zone centrale ZC (donc ni l'extrémité E1 ni à l'extrémité E2), le dispositif échangeur de chaleur 50 peut être interposé entre le filtre 3 et la pompe P, suivant la direction d'allongement D2 (figure 7) du carter 2, de préférence avec le bloc échangeur de ce dispositif 50 qui se monte sous la paroi supérieure 2b et sans dépasser plus bas que la paroi de fond 2a.

Le carter 2 peut être est échancré sur un côté de façon à entourer (au moins partiellement) un tel composant ou moyen de refroidissement. Le dispositif échangeur de chaleur 50 peut être séparé de la zone centrale ZC par un tronçon de la paroi latérale du carter 2 qui réduit localement une largeur du volume interne V2. Une partie de couvercle 52 peut être prévu dans ce dispositif échangeur 50, de façon à prendre en sandwich une portion de marge de la paroi supérieure 2b, entre la partie de couvercle 52 et un bloc métallique à circulation d'huile formant partie du dispositif échangeur 50.
Quelle que soit l'intégration choisie pour le dispositif 50, l'unité 1 peut permettre de réguler ou mieux adapter la température de l'huile préfiltrée acheminée à l'entrée 31 du filtre 3.

De tels raccords 2d forment des entrées des colonnes ou parties de remontée d'huile dont a besoin chacun des composants externes M, Sr surmontant le carter 2, comme illustré dans le cas de la figure 6. Le recours deux raccords 2d ou davantage permet d'alimenter différentes zones ou composants, avec en outre la possibilité de réduire l'encombrement en pouvant disposer l'un des raccords plus bas qu'un autre, comme dans le cas montré sure la figure 6 avec un raccord 2d prévu sur la paroi supérieure 2b dans une zone de celle-ci qui correspond à un creusement vers le bas ou dépression 200.

Pour ce type d'application, avec ou sans dispositif échangeur 50 porté par le carter 1, on comprend que l'huile est du type ayant une densité habituelle pour la lubrification, par exemple avec une masse volumique de l'ordre de 900 kg/m³, par exemple comprise entre 840 et 960 kg/m³.

Concernant les composants à lubrifier, ceux-ci peuvent inclure au moins un moteur électrique M et un réducteur SR. Plus largement, on comprend que, par de tels composants externes, différents circuits de flux de puissance ayant différents rapports de vitesse peuvent être établis en engageant différents embrayages. Optionnellement, une boîte de transfert peut être installée entre l'arbre de sortie et un arbre de transmission pour dévier une partie de la puissance vers un différentiel.
Dans ces applications, une partie de la puissance du moteur peut être détournée pour entraîner la pompe P prévue pour aspirer l'huile ou fluide lubrifiant similaire du carter 2, à travers le filtre 3 puis les raccords 2d. La pression à laquelle ce fluide/huile purifiée (flux F') pénètre dans un corps de valve ou partie comparable pour la lubrification des composants externes est généralement appelée pression de fluide ou pression de ligne. Par un contrôleur qui commande un réseau de vannes de contrôle, de l'huile peut être transmise aux composants lubrifiés/à lubrifier (ce qui peut inclure un convertisseur de couple et une boîte de vitesses) à des pressions souhaitées inférieures à la pression de ligne et à des débits souhaités.

Après avoir réalisé la fonction de lubrification par écoulement depuis les vannes de commande appropriées, le flux d'huile utilisée RH peut s'écouler et tomber par gravité, comme visible sur la figure 6 depuis les composants externes lubrifiés.

Dans des applications pour des véhicules à motorisation électrique ou hybride (thermique et électrique), l'unité 1 peut équiper une partie d'un système combinant différents modules, par exemple en complétant le système 3-en-1 « eAxle » (essieu électrique) qui combine un moteur électrique, un onduleur et un réducteur, typiquement dans une enveloppe commune. La figure 6 montre, plus largement, un cas avec des composants externes M, Sr de motorisation et de transmission (moteur M et réducteur Sr).
Le filtre 3 de l'unité agencement peut faire partie d'un système de gestion de l'alimentation en huile pour la transmission, pour le moteur électrique et/ou pour le refroidissement de la batterie. Les accès d'admission de l'huile RH peuvent s'installer sur la paroi supérieure 2b du carter d'huile 2, au sein d'un tel système. Le format aplati de l'unité 1 permet par exemple une installation sur un côté inférieur d'une enveloppe de composant ou du moteur électrique du système. Plus largement, l'unité 1 est suffisamment compacte pour s'intégrer (dans un état préassemblé par exemple) sous les composants d'un système motorisé transmission, par exemple dans une région basse d'un système intégré qui dispose de différents modules.

L'intégration d'une partie de refroidissement, par le dispositif échangeur 50, peut compléter le système - le cas échéant sans recours à d'autres éléments de refroidissement. Une utilisation de l'unité 1 (avec son filtre 3) équipant un système 3-en-1 comme susmentionné ou autre système multi-composants similaire, qui forme un ensemble à enveloppement compact au-dessus du bac d'huile, est permise avec une optimisation/réduction de l'encombrement.

### Mode d'obturation d'accès au volume interne

L'unité 1 dispose, dans la paroi supérieure 2b, d'un ou plusieurs accès 21, 22 sélectifs pour le retour de l'huile correspondant au flux gravitaire d'huile RH du ou des composants qui ont été lubrifiés par utilisation de l'huile (flux F') admise via les raccords 2d. En référence à la figure 1, ces accès 21, 22 peuvent répartis de part et d'autre d'une zone centrale ZC du carter 2 ou tout du moins dans différents secteurs angulaires. Ces accès 21, 22 ne se situent donc pas à l'aplomb de la zone centrale ZC par laquelle passe ou commence la voie 9 de pompage. L'entrée 6 constitue typiquement l'extrémité de cette voie de pompage 9, tandis qu'une ou plusieurs voies périphériques VP peuvent former des tronçons de terminaison de la voie de pompage 9.

En cas d'inclinaison du carter 2 du fait de la position inclinée du véhicule qui embarque l'unité 1, et comme visible sur la figure 1, l'accès 21 ou 22 du côté où cela penche peut permettre une remontée d'huile, en sens inverse de la descente, tant que l'accès concerné reste accessible par le dessous. L'unité 1 prévue ici empêche cette remontée, dans ce cas d'inclinaison par l'accès 22, en munissant ce dernier d'une vanne ou d'un clapet 4 dont la partie d'obturation CV remonte en suivant la montée du niveau d'huile sur ce côté, de façon à s'engager sur une portion fixe appelée portion de siège S, pouvant correspondre à une bordure d'un débouché inférieur de l'accès 21, 22. Cette disposition peut être aussi prévue pour l'autre ou les autres accès. L'accès 21 de la figure 1, comme l'accès 22, est pourvu d'un clapet 4 à coulisseau, ce qui permet une remontée rapide, provoquée par une poussée de l'huile et/ou par un effet de rappel d'un moyen de rappel R1, R2.
Plus particulièrement, l'unité 1 comprend des clapets de fermeture 4 de chacun des accès 21, 22 de retour/réadmission d'huile, qui constituent ainsi des clapets anti-retours d'huile : l'accès est donc sélectif (directionnel pour autoriser la descente mais pas la remontée). Pour chacun des clapets de fermeture 4, on peut prévoir un coulisseau 4a, 4b qui porte ou inclut la partie d'obturation CV.

Les clapets 4 peuvent être montés de façon à présenter une partie supérieure qui est élargie par rapport au reste du clapet, à l'exception d'un élément d'étanchéité J, réalisé par exemple sous forme de joint élastomère annulaire ou de lèvre d'étanchéité flexible. L'unité 1 peut inclure deux coulisseaux : un premier coulisseau 4a monté dans le premier accès 21 et un deuxième coulisseau 4b monté dans le premier accès 22. En référence aux figures 1 à 3, il est montré un exemple de montage d'un clapet 4 avec ce coulisseau 4a ou 4b. Ces premier et deuxième coulisseaux 4a, 4b sont chacun logés et guidés, suivant une direction de guidage, dans l'accès correspondant 21, respectivement 22. L'effet de guidage est permis pas une partie d'insertion du coulisseau 4a, 4b, qui est insérée au travers de la paroi supérieure 2b suivant une direction de descente opposée à la direction Z de la figure 1. L'élément d'étanchéité J est porté par chacun des coulisseaux 4a, 4b en se raccordant sur une gorge G4 postérieurement à l'insertion. Plus largement, le guidage dans l'accès 21 ou 22 s'effectue dans une zone de rétrécissement de section du clapet, qui correspond à un tronçon intermédiaire du coulisseau 4a, 4b qui est allongé.

La partie d'obturation d'obturation CV, mobile avec le coulisseau, peut combler/obturer l'accès dès que la portion de butée Jb prévue sur un dessus annulaire de l'élément d'étanchéité s'engage contre la portion de siège S. Un flasque 7 fixe, de forme annulaire et qui délimite l'ouverture unique O2 formant l'accès, peut optionnellement former la portion de siège S en formant aussi une surface supérieur bloquant la descente du coulisseau 4a, 4b en formant une zone de contact axial pour la ou les butées B4. On comprend que les deux portions de butée B4 et Jb limitent la course de coulissement du coulisseau 4a, 4b.
La partie du coulisseau venant en contact de guidage sur l'intérieur du flasque 7 annulaire peut inclure plusieurs barreaux 4p, parallèles à l'axe X et délimitant entre eux les ouvertures latérales O4. Ces barreaux 4p portent la partie d'obturation CV qui peut aussi inclure l'organe de flottaison 4f. Avantageusement pour rendre l'organe de flottaison 4f compact, celui-ci peut présenter un amincissement d'épaisseur annulaire, formé entre la gorge G4 et l'évidement 4H.

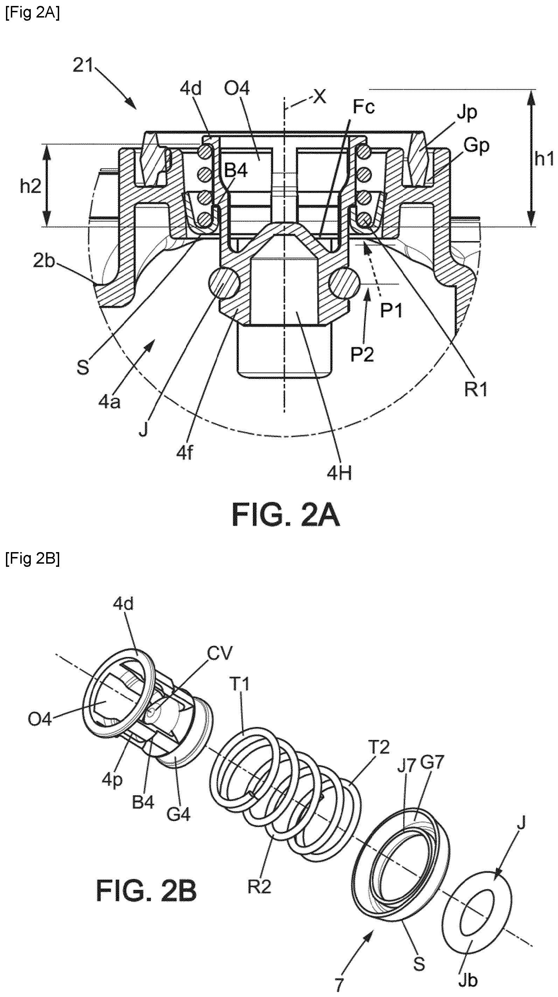

Comme visible sur l'exemple des figures 2A et 2B, la partie supérieure de chaque coulisseau 4a, 4b peut avoir une section annulaire au moins sur un bord libre ou dessus de celle-ci et disposer d'ouvertures latérales O4 permettant la retombée de l'huile HR en contournant la partie d'obturation CV. Par rapport à un axe X de déplacement de coulisseau (figure 2A), qui définit une direction d'allongement du coulisseau 4a, 4b, la partie d'obturation CV est perpendiculaire. Cela permet à chaque clapet 4 de présenter :
- un configuration passante, c'est-à-dire d'ouverture avec la ou les ouvertures latérales O4 positionnées plus bas (au moins en partie) que la portion de siège S ; et
- une configuration non passante avec une position comparativement remontée du coulisseau 4a, 4b, dans laquelle la ou les ouvertures latérales O4 sont entièrement disposées au-dessus de la portion de siège Sn sur laquelle vient buter et s'engager de façon étanche l'élément d'étanchéité J annulaire.

Cet élément d'étanchéité J est élastiquement déformable (en étant typiquement compressible) et forme un bourrelet apte à venir s'engager, par un contact annulaire contre la portion de siège S prévue comme une surface fixe solidaire de la paroi supérieure 2b. Le tronçon du coulisseau 4a, 4b qui est guidé s'étend entre cette gorge G4 et une zone avec butée B4 résultant d'un ou plusieurs épaulements externes qui font la transition avec la partie supérieure (ainsi élargie). La remontée de coulisseau avec la position de butée de l'élément d'étanchéité J peut assistée/initiée par l'un et/ou l'autre des effets suivants :
- la poussée d'Archimède de l'huile remontant pour pousser un organe ou ensemble de flottaison 4f qui fait structurellement partie du coulisseau 4a, 4b en s'étendant dans le volume interne V2 dans la configuration passante ;
- la poussée ou effet de rappel d'un élément de rappel R1, R2, qui peut être un ressort, monté sur la partie supérieure du coulisseau, et qui exerce une force de rappel dirigée à l'opposé du volume interne V2, suivant la direction Z ascendante en l'absence d'inclinaison (position horizontale du carter 2 de l'unité 1).

Plus généralement, quelle que soit la structure retenue pour réaliser le clapet 4, on comprend que chaque coulisseau 4a, 4b peut remonter rapidement en présence d'un niveau d'huile du volume interne V2 suffisant pour atteindre l'accès correspondant, et cela d'autant plus facilement que l'unité 1 prévoit une entrée d'aspiration 6, qui provoque une dépression dans le volume interne V2 dans lequel débouchent les accès 21, 22. Le fonctionnement avec réadmission d'huile n'est pas altéré par la présence des clapets 4, dans la mesure où chaque partie d'obturation CV est soumise à un poids d'huile significatif tant que le flux RH de retombée est fourni à un débit normal/habituel.
La surface Fc (figure 2A) sur le dessus de la partie d'obturation peut être bombé vers le haut pour faciliter l'écoulement radialement vers l'extérieur, avec un bombement centré par rapport à un axe central du coulisseau (qui peut être un axe confondu avec l'axe X). Chaque coulisseau 4a, 4b, peut être réalisé en une seule pièce, par exemple en plastique rigide.

Pour s'assurer que la descente du coulisseau 4a, 4b s'effectue de manière réactive, on peut réaliser le clapet 4 sans ressort ou élément de rappel sollicitant la fermeture, dans des options où l'effet de flottaison est suffisant pour obtenir de façon fiable la remontée et la configuration non passante. Les figures 1 et 3 montrent un exemple de réalisation sans ressort ou élément de rappel. L'accès 22 visible sur la figure 1, à gauche, est tout de même bouché par l'effet de flottaison de l'organe de flottaison qui constitue la partie inférieure ou insérée du coulisseau 4b.
Cette disposition prévient le risque de désamorçage de l'aspiration du côté de l'entrée 6, par manque d'huile lorsque celle-ci peut remonter au-delà de la paroi supérieure par l'un des accès 21, 22 : sur la figure 1, on voit que le niveau de l'huile Hu dans la zone centrale reste au-dessus du tamis 60 ou zone d'admission équivalente de l'entrée 6.

En variante, l'effet de flottaison peut seconder l'effet de rappel exercé par l'élément de rappel R1, R2. Une situation penchée qui évite la retombée correcte d'huile HR va limiter l'impact de la dépression (cette dépression régnant dans la partie non remplie du volume interne V2, pas du côté d'un coulisseau 4a ou 4b commençant à être porté/repoussé par la masse d'huile). Dans une réalisation avec un ressort, l'effet de rappel peut, à lui seul, permettre la remontée lorsque l'aspiration ne suffit plus à garder le ressort comprimé (en ayant la hauteur de ressort h2, comme visible par exemple sur la figure 2A) : celui-ci va repousser le rebord ou collerette 4d prévue à l'extrémité supérieure du coulisseau 4a, 4b. Typiquement, la collerette 4d est disposée au-delà des ouvertures latérales O4 et forme un rebord annulaire radialement saillant vers l'extérieur.

Dans tous les cas, on comprend que le mode d'obturation correspond à une adaptation aux circonstances et conditions affectant le volume interne V2 : typiquement en fonctionnement, il ne dure que le temps durant lequel la collecte et la circulation d'huile sont réalisées en condition inclinée du carter 2 de l'unité 1. Le filtre 3, dont la chambre de filtration est séparée du volume interne V2, n'est pas soumis aux aléas de niveau d'huile dans le volume interne V2 servant au stockage de l'huile Hu. En effet, ce filtre 3 se situe sur le côté avec pression de la pompe P (en aval).
Par ailleurs, la présence d'un autre accès sur le côté opposé, par rapport à la zone centrale ZC, permet de s'assurer qu'un accès au moins reste en configuration passante, ce qui contribue à éviter une baisse du niveau de l'huile dans la zone centrale : ce niveau peut ainsi rester supérieur à la position du tamis pour éviter l'aspiration d'air et/ou un effet indésirable de désamorçage.

En référence à la figure 2B, on peut voir qu'une option d'intégration d'un élément de rappel R1, R2 peut être de prévoir une gorge G7 ou zone fixe de retenue dans un flasque 7 ou une pièce prévue pour délimiter la taille de passage, typiquement le diamètre interne, de l'accès correspondant. Ainsi, l'élément de rappel R1, R2 peut s'étendre entre une première terminaison T1 qui est mobile avec le coulisseau 4a, 4b et une deuxième terminaison qui reste fixe et en contact avec le flasque 7. Dans le cas d'un ressort hélicoïdal, la gorge G7 peut être ouverte seulement sur le dessus et permet un centrage du ressort. Une jupe intérieure J7 de ce flasque 7 peut former une délimitation intérieure de la gorge G7, ici annulaire. Le flasque 7 peut à la fois former la portion de siège sur son dessous, et la gorge G7 qui est accessible à l'opposé, par son dessus.
Avec ou sans élément(s) de rappel prévu(s) pour la fermeture des accès 21 et 22, les coulisseaux 4a, et 4b de l'unité 1 peuvent avoir une course linéaire, chacune entre une position extrême P1, P1' haute qui correspond à la configuration non passante, et une entre une position extrême P2, P2' basse qui correspond à la configuration passante pour un écoulement de l'huile RH. Si un ressort ou élément de rappel élastique est prévue avec deux extrémités ou terminaisons T1, T2 entre lesquelles est définie sa hauteur, alors une telle hauteur peut varier, pour atteindre un maximum de hauteur h1 (figure 2A) en obtenant en pratique la fermeture d'accès avec la position haute P1, P1' du coulisseau 4a, 4b.

En cas d'inclinaison importante, on comprend qu'un effet de rappel peut être particulièrement utile/avantageux pour compenser une éventuelle insuffisance de la poussée d'Archimède de l'huile Hu (la force de poussée qui est alors désaxée par rapport à la direction de l'axe X de coulissement/déplacement guidé. La présence d'un évidement 4H central dans le bas du coulisseau 4a, 4b, entouré par l'élément d'étanchéité en ayant une profondeur de plusieurs millimètres, avec typiquement cette profondeur dépassant 30% de la longueur totale du coulisseau 4a, 4b considéré, peut faciliter la remontée malgré l'angle élevé d'inclinaison : le fond de cet évidement 4H peut être concave pour qu'une poussée désaxée pousse tout de même une portion latérale de la partie d'obturation. Cette structure non plate et creusée par le dessous peut être préférée pour former l'organe de flottaison 4f directement dans la pièce plastique guidée et formant le coulisseau 4a, 4b.

Chaque clapet 4 peut se monter dans un port de connexion ou raccord, d'extension généralement tubulaire autour d'un axe, qui permet de porter (par le dessus/du côté extérieur de la paroi supérieure 2b du carter) un joint annulaire périphérique Jp (figure 2A). Ce joint annulaire Jp est par exemple reçu dans une gorge Gp à débouché axial supérieur qui entoure le coulisseau 4a, 4b.

### Exemple d'élément filtrant

Afin d'optimiser la durée de bon fonctionnement des composants de transmission et du circuit C3 d'huile sous pression associé, porté par l'unité 1, la surface de média filtrant MF du filtre 3 peut être grande/optimisée, par exemple en utilisant une configuration annulaire ou tubulaire du média filtrant MF, prévu avec une ou plusieurs couches de filtration. La chambre de filtration peut être délimitée par deux parties ou moitiés d'un boîtier 23 qui peuvent être deux coques Hv1, Hv2 complémentaires du carter 2. La première coque Hv1 peut faire partie de la pièce constituant la paroi de fond 2a et deuxième coque Hv2 peut faire partie de la pièce constituant la paroi supérieure 2b. Le boîtier 23, au mois par sa coque Hv2, peut être visible sur le dessus du carter 2 avec ces deux parois 2a, 2b assemblées, comme montré par exemple sur la figure 4B. Ce boîtier 23 est configurée avec une sortie 32 traversée par un axe de montage de l'élément filtrant EF.

En référence aux figures 4A, 4B et 5 par exemple, on peut voir plus largement que la solidarisation du filtre 3 au carter 2 peut résulter du fait que la chambre de filtration est délimitée par la paroi supérieure 2 et un composant complémentaire, qui peut être la paroi inférieure/de fond 2a. Dans le boîtier, l'élément filtrant EF sépare la zone d'aval Z2 qui inclut l'espace intérieur creux central (espace délimité par la face interne du média MF) de la zone d'amont Z1 où débouche une entrée 31 du filtre qui est formée latéralement sur le boîtier. L'élément filtrant EF peut s'étendre de façon longitudinale autour d'un axe qui correspond à l'axe de montage, entre une première extrémité axiale 30a et une deuxième extrémité axiale 30b. La zone d'amont Z1 peut inclure une région périphérique de la chambre, entourant complètement le média filtrant MF.

Sur l'exemple non limitatif de la figure 5 on peut voir qu'un premier flasque 33, ici prévu sans ouverture axiale, constitue la première extrémité 30a. Le média filtrant MF s'étend de façon annulaire autour de l'axe de montage, en enveloppant une ossature 3s centrale tubulaire ajourée apte à soutenir le média filtrant MF intérieurement (du côté de la face interne de ce média filtrant MF). Un deuxième flasque 34 axialement opposé au premier flasque 33 complète ce dernier pour fixer et/ou maintenir les extrémités axiales du média filtrant MF. Ces deux flasques 33, 4 et l'ossature 3s peuvent ainsi former la partie structurelle rigide de l'élément filtrant EF. Ce dernier peut constituer une cartouche sélectivement remplaçable dans des options de réalisation (en réutilisant le boîtier 23).

Le deuxième flasque 34 inclut un embout tubulaire 35, saillant par rapport à la portion radiale du flasque 34, avec une ouverture centrale de ce flasque permettant de faire communiquer l'espace intérieur creux (de la zone d'aval Z2) avec la sortie 32 pour évacuer le flux d'huile épuré F' hors de la chambre de filtration.
La sortie 32 est en communication avec le circuit de lubrification de composant(s) M, SR via le ou les raccords 2d rendus accessibles par la voie 32', qui peut contourner de préférence le volume interne V2.
Le média MF peut être ainsi adapté pour purifier la totalité de l'huile sortant du carter 2 via les raccords 2d de remontée d'huile. L'élément filtrant EF du filtre, qui fait partie du circuit C3 avec la mise sous pression de l'huile Hp, en se situant aval de la pompe P, peut être entièrement recouvert par la paroi supérieure 2b et possiblement sans dépasser plus haut que les coulisseaux 4a, 4b ou tout du moins le plus élevé des coulisseaux 4a prévus pour le retour d'huile. Lorsque l'un des accès 21 est comparativement plus éloigné de la paroi de fond 2 que l'autre accès 22, cet accès 21 peut être proche du boîtier 23. Cela peut permettre d'aplatir davantage le carter 2 à l'extrémité E1 opposée au lieu d'intégration du filtre 3, ici vers/à l'extrémité E2.

Plus généralement, on comprend que le filtre 3 peut faire partie d'un étage de filtration qui, dans le carter 2 (intérieurement dans celui-ci), est décalé latéralement par rapport à la zone centrale ZC, pour définir une chambre de filtration dans une région distincte d'une zone d'intégration ou raccordement de la pompe d'aspiration P.

Bien que les exemples illustrés montrent un filtre 3 du type à cartouche filtrante, possiblement remplaçable, d'autres options sont permises. Le cas échéant, le filtre 3 comporte un boîtier réutilisable pour délimiter la totalité de la chambre de filtration (une partie du boîtier au moins fait partie intégrante d'un composant de carter tel que la paroi supérieure 2b. Une cartouche ou un insert de filtration, avec média MF de structure annulaire ou non, peut se monter de manière amovible dans le boîtier réutilisable.

Dans certaines conceptions de l'unité 1, il est prévu un élément filtrant EF qui peut se monter et se retirer d'un seul bloc, lorsque la paroi supérieure 2b ne recouvre pas la paroi de fond 2a. Dans le cas de la figure 5, le premier flasque 33 (flasque de base) est espacé, axialement suivant l'axe central (axe de montage) de l'élément filtrant EF, d'une première cloison de délimitation de la chambre de filtration. Ceci permet de connecter et déconnecter l'élément filtrant EF en réalisant un contact étanche dans une partie de conduite formant la sortie 32 : l'élément filtrant EF de la figure 5 peut se retirer (après enlèvement de la paroi supérieure 2b et/ou de la paroi de fond dans cet exemple) en étant déplacé axialement vers la première cloison de délimitation. Le contact étanche annulaire Cr (contact radial) réalisé entre un bourrelet périphérique ou partie d'étanchéité similaire (radialement saillante vers l'extérieur) de l'embout tubulaire 35 et le conduit de réception de la sortie 32, permet d'éviter toute entrée d'huile de la zone d'amont Z1 dans la sortie 32.

En référence à la figure 7, une distance d entre les axes longitudinaux des clapets 4 (donc des vannes portant ces clapets 4), typiquement mesurée suivant la direction d'allongement D2 du carter 2, peut être supérieure à la moitié d'une dimension (largeur et/ou longueur) du carter 2. Plus généralement, lorsque plusieurs accès sont distribués autour de la zone centrale ZC, on peut prévoir une distance minimale d' supérieure à une dizaine ou vingtaine de centimètres. Dans une option avec quatre accès une répartition dans quatre directions, avec par exemple deux paires d'accès éloignés d'une même distance d (ou distance similaire) dépassant la quinzaine de centimètres peut être prévue.
Dans ces exemples, la ou les ouvertures O2 sont prévues sur la paroi supérieure 2b en étant obturées pour tout ou partie d'entre elles, par la partie d'obturation CV des coulisseaux 4a, 4b qui ont chacun leur propres ouvertures O4 situées plus hautes que la partie d'obturation. Dans certaines variantes, on peut ajouter un clapet flexible à sens unique porté par le coulisseau dans la partie d'obturation CV, par exemple pour permettre un écoulement plus central : ce clapet flexible remonte avec le coulisseau 4a, 4b et peut s'ouvrir/libérer un passage central uniquement lorsqu'un poids d'huile s'exerce par le dessus de ce clapet (qui peut fonctionner comme un sous-clapet).

Bien entendu, d'autres dispositions, sans organe de flottaison 4f ou sans élément de rappel R1, R2, peuvent aussi être adoptées pour constituer un ou plusieurs des clapets 4, par exemple sous réserve que la circulation descendante du flux d'huile RH puisse se faire au travers de la paroi supérieure 2b, avant de rejoindre le volume interne V2.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

Par exemple, il a été illustré de façon limitative le cas d'un filtre 3 recevant le flux sous pression d'huile, par une canalisation simple (sans vanne) passant par la pompe P et prélevant l'huile stockée en un seul point de la zone centrale ZC, mais il peut être prévu une entrée différente ou plusieurs entrées différentes pour permettre la circulation de l'huile aspirée Ha, avec ou sans vanne anti-retour. Également, bien qu'un nombre pair d'accès avec vannes 4 a été représenté dans les différents cas illustrés, l'unité 1 peut tout aussi bien inclure un nombre quelconque, possiblement impair, d'accès pour le retour d'huile dans le volume interne V2.

## Revendications

1. Unité (1) de collecte et stockage de l'huile, comportant :
- un carter d'huile de transmission (2) pourvu d'une paroi de fond (2a) et d'une paroi supérieure (2b), entre lesquelles est délimité un volume interne (V2) du carter permettant un stockage d'huile (Hu) ;
- dans la paroi supérieure (2b), un premier accès (21) sélectif pour le retour d'huile brute dans le carter par le dessus et un deuxième accès (22) sélectif pour l'admission d'huile brute dans le carter par le dessus ;
- une voie (9) de pompage d'huile stockée dans le volume interne (V2), pour permettre la communication avec un circuit de lubrification d'un ou plusieurs composants (M, SR) externes au et placés au-dessus du volume interne (V2) du carter (2) ;
**caractérisée en ce que** l'unité (1) comprend des clapets de fermeture (4) de chacun desdits accès (21, 22) sélectifs, les clapets de fermeture (4) comportant :
- logés et guidés suivant une direction de guidage dans le premier accès (21) et dans le deuxième accès (22) respectivement, un premier coulisseau (4a) et un deuxième coulisseau (4b) ;
**et en ce que :**
- le premier accès (21) et le deuxième accès (22) sont répartis de part et d'autre d'une zone du carter par laquelle passe ou commence la voie (9) de pompage,
- le premier coulisseau (4a) inclut une première partie d'obturation (CV) se soulevant en étant sollicitée par un moyen de rappel (R1) et/ou en ayant une structure d'organe ou ensemble de flottaison (4f) pour se soulever en présence d'un niveau d'huile du volume interne (V2) suffisant pour atteindre le premier accès (21), le premier coulisseau (4a) occupant, pour cet état soulevé, un état d'obturation du premier accès (21),
- le deuxième coulisseau (4b) inclut une deuxième partie d'obturation (CV) se soulevant en étant sollicitée par un moyen de rappel (R2) et/ou en ayant une structure d'organe ou ensemble de flottaison (4f) pour se soulever en présence d'un niveau d'huile du volume interne (V2) suffisant pour atteindre le deuxième accès (22), le deuxième coulisseau (4b) occupant, pour cet autre état soulevé, un état d'obturation du deuxième accès (22).

2. Unité selon la revendication 1, comprenant un filtre (3) solidaire du carter (2), le filtre (3) présentant un média filtrant (MF) et une chambre de filtration, logeant le média filtrant MF et accessible par une entrée (31) qui communique avec la voie (9) de pompage d'huile, de sorte que l'unité (1) permet une filtration par le média filtrant (MF), de préférence en aval d'un préfiltre pouvant inclure un tamis équipant la voie de pompage,
et dans laquelle la chambre de filtration prévue dans le filtre (3) est séparée du volume interne (V2) par la voie de pompage (9) et/ou par une paroi ou un boîtier (23) de filtre.

3. Unité selon la revendication 1 ou 2, dans laquelle, suivant la direction de guidage, l'une au moins parmi les première et deuxième parties d'obturation (CV) est :
- disposée mobile, pour s'éloigner et se rapprocher de la paroi de fond (2a), entre une configuration d'ouverture et l'état d'obturation pour obturer l'accès (21, 22) dans lequel ce coulisseau (4a, 4b) est guidé ; et
- pourvue de deux portions de butée (B4, Jb) réparties de part et d'autre d'une bordure annulaire formant une zone de siège (S) fixement solidaire de la paroi supérieure (2b), les deux portions de butée (B4, Jb) limitant la course de coulissement du coulisseau (4a, 4b) ;
et dans laquelle un élément d'étanchéité (J) élastiquement déformable ou compressible forme l'une des deux portions de butée (Jb) prévue pour venir en contact avec la zone de siège (S) par le dessous, du côté du volume interne (V2).

4. Unité selon l'une des revendications précédentes, dans laquelle l'un au moins parmi les premier et deuxième organes ou ensembles de flottaison (4f), qui s'étend de préférence sous la paroi supérieure (2b), est conçu pour constituer ou porter la partie d'obturation (CV) du coulisseau correspondant en étant disposé mobile suivant la direction de guidage pour permettre d'éloigner cette partie d'obturation (CV) de la paroi de fond (2a),
et dans laquelle l'un au moins, et de préférence l'un et l'autre, parmi les premier et deuxième organes ou ensembles de flottaison (4f) :
- s'étendent sous la paroi supérieure (2b) ; et
- incluent chacun au moins un évidement (4H) qui est fermé et étanche et/ou qui définit un volume sélectivement accessible par le bas.

5. Unité selon l'une quelconque des revendications précédentes, dans laquelle l'un et l'autre des premier et deuxième organes ou ensembles de flottaison (4f) :
- incluent la partie d'obturation (CV) du coulisseau correspondant en permettant d'éloigner cette dernière de la paroi de fond (2a) jusqu'à obtenir l'obturation pour obturer l'accès dans lequel ce coulisseau est guidé ; et
- incluent respectivement un élément d'étanchéité (J) de forme annulaire entourant une zone creuse du coulisseau, l'élément d'étanchéité (J) étant de préférence porté ou formé à une extrémité inférieure du coulisseau ;
sachant que chaque coulisseau (4a, 4b) consiste en un ensemble mobile ou une pièce mobile guidée dans l'accès suivant un axe (X) de déplacement de coulisseau, qui est de préférence sensiblement perpendiculaire à la paroi de fond (2a).

6. Unité selon l'une quelconque des revendications précédentes, comprenant une pompe (P) d'aspiration d'huile, en particulier permettant de mettre en dépression le volume interne (V2) délimité sous la paroi supérieure (2b) et sous les clapets (4), le volume interne (V2) étant en communication fluidique avec une entrée d'aspiration de la pompe (P),
dans laquelle la pompe (P) fait partie de la voie (9) de pompage et comporte une sortie de refoulement (90) en communication fluidique avec le circuit de lubrification d'un ou plusieurs composants (M, SR) ce grâce à quoi l'huile est mise sous pression en aval de la pompe (P).

7. Unité selon la revendication 6 lorsqu'elle dépend de la revendication 2, comportant un dispositif échangeur de chaleur (50) qui est interposé, suivant une direction (D2) d'allongement du carter (2), entre :
- le filtre (3), disposé à une extrémité (E2) du carter (2) ;
- et ladite pompe (P) qui permet de faire circuler un flux d'huile depuis le volume interne (V2) vers une entrée du dispositif échangeur de chaleur (50);
et dans laquelle l'entrée (31) du filtre (3) communique avec une sortie du dispositif échangeur de chaleur (50).

8. Unité selon l'une quelconque des revendications 1 à 7, comprenant :
- un premier élément de rappel (R1) pour le rappel du premier coulisseau (4a) vers une position remontée et éloignée de la paroi de fond (2a) ; et
- un deuxième élément de rappel (R2) pour le rappel du deuxième coulisseau (4b) vers une position remontée et éloignée de la paroi de fond (2a) ;
ces éléments de rappel (R1, R2) étant montés chacun pour déplacer par défaut la partie d'obturation (CV) dans une configuration de fermeture d'accès, respectivement pour la fermeture du premier accès (21) et pour la fermeture du deuxième accès (22).

9. Unité selon l'une quelconque des revendications 1 à 8, dans laquelle le premier accès (21) est obturé dans une première position de premier coulisseau (P1) qui est distale de la paroi de fond (2a), la partie d'obturation (CV) prévue dans le premier coulisseau (4a) obturant ce premier accès (21) du côté du volume interne (V2) en venant s'appuyer sur une zone de siège annulaire (S) portée par la paroi supérieure (2b),
et dans laquelle le deuxième accès (22) est obturé dans une première position de deuxième coulisseau (P1') qui est distale de la paroi de fond (2a), la partie d'obturation (CV) prévue dans le deuxième coulisseau (4b) obturant ce deuxième accès (22) du côté du volume interne (V2) en venant s'appuyer sur une autre zone de siège annulaire (S) portée par la paroi supérieure (2b),
et dans laquelle la configuration d'ouverture est obtenue, sous un effet de gravité pour chacun des coulisseaux (4a, 4b) qui sont en regard de la paroi de fond (2a) formant le bas du carter (2), pour une deuxième position de coulisseau (P2, P2') qui est proximale et donc rapprochée de la paroi de fond (2a).

10. Unité selon l'une quelconque des revendications précédentes, dans laquelle les moyens de rappel comportent un premier ressort et un deuxième ressort,
dans laquelle le premier coulisseau (4a) est sollicité par le premier ressort pour obtenir la configuration d'ouverture du premier coulisseau, le premier ressort étant compressible et ayant une raideur adaptée pour se comprimer lorsqu'une masse d'huile appuie sur le dessus de la partie d'obturation du premier coulisseau,
et dans laquelle le deuxième coulisseau (4b) est sollicité par le deuxième ressort pour obtenir la configuration d'ouverture du deuxième coulisseau, le deuxième ressort étant compressible et ayant une raideur adaptée pour se comprimer lorsqu'une masse d'huile appuie sur le dessus de la partie d'obturation du deuxième coulisseau,
ce grâce à quoi les accès (21, 22) permettent l'admission d'huile brute dans le carter par le dessus avec un effet anti-remontée d'huile automatique et assisté par une force de rappel en cas d'inclinaison du carter.

11. Unité selon la revendication 2 ou l'une quelconque des revendications 3 à 10 lorsqu'elle dépend de la revendication 2, dans laquelle le filtre (3) comprend un élément filtrant (EF) adapté pour être monté entre la paroi inférieure (2a) et la paroi supérieure (2b), l'élément filtrant (EF) étant logé dans la chambre de filtration en incluant un flasque (34) pourvu d'un orifice central (O3) et ledit média filtrant (MF) sous une forme annulaire avec une extrémité de média raccordée au flasque (34), de sorte que l'élément filtrant (EF) délimite, par une face interne du média filtrant (MF), un espace intérieur creux en communication fluidique avec une sortie (32) du filtre (3) via l'orifice central (O3).

12. Unité selon la revendication 2 ou l'une quelconque des revendications 3 à 11 lorsqu'elle dépend de la revendication 2, dans laquelle la paroi supérieure (2b) comporte au moins un, et de préférence au moins deux raccords (2d) de circulation d'huile distincts des accès (21, 22) et délimite :
- tout ou partie d'une chambre de filtration du filtre (3), le média filtrant (MF) étant de préférence adapté pour purifier la totalité de l'huile sortant du carter (2) via les raccords (2d) de remontée d'huile qui sont prévus dans cette paroi ; et
- la sortie (32).

13. Unité selon la revendication 11 et selon la revendication 12, dans laquelle la sortie (32) du filtre (3) est intégrée dans la paroi supérieure (2b) et entoure un embout saillant (35) formé comme une projection annulaire sur le flasque (34), de façon à se raccorder de façon étanche à l'élément filtrant (EF) par un contact annulaire radial (Cr) sur ledit embout prévu dans le flasque (34).
